# EUROPÄISCHE PATENTSCHRIFT

(11) **EP 1 138 710 B1**
(45) Veröffentlichungstag und Bekanntmachung des Hinweises auf die Patenterteilung: **17.08.2005**
(21) Anmeldenummer: 01106369.0
(22) Anmeldetag: 19.03.2001
(51) Int. Cl.: C08G 18/67, C08G 18/81, C09D 175/16

(54) **Beschichtungssystem enthaltend UV-härtbare, Isocyanatgruppen aufweisende Urethan (meth) acrylate und Hydroxylgruppen aufweisende Urethan (meth) acrylate**
Coating system containing UV curable urethane (meth)acrylates having isocyanate groups and urethane (meth)acrylates having hydroxy groups
Système de revêtement contenant des uréthane-(meth)acrylates contenant des groupes isocyanate et des uréthane-(meth)acrylates contenant des groupes hydroxyle durcissables sous U.V

(30) Priorität: 31.03.2000 DE 10016194
(43) Veröffentlichungstag der Anmeldung: 04.10.2001
(73) Patentinhaber: Bayer MaterialScience AG, 51368 Leverkusen (DE)
(72) Erfinder: Weikard, Jan Dr., 51519 Odenthal (DE); Sonntag, Michael Dr., 51519 Odenthal (DE); Mundstock, Holger Dr., 42929 Wermelskirchen (DE)

(56) Entgegenhaltungen:
- EP-A- 0 287 736
- EP-A- 0 928 800
- DATABASE WPI Section Ch, Week 199735 Derwent Publications Ltd., London, GB; Class A14, AN 1997-383111 XP002170409 & JP 09 167523 A (HITACHI CABLE LTD), 24. Juni 1997 (1997-06-24)

## Beschreibung

Die Erfindung betrifft ein Beschichtungssystem, bei dem durch UV-Härtung von (Meth)Acryloylgruppen enthaltenden Komponenten trockene, handhabbare Oberflächen entstehen, die anschließend durch Vernetzung von NCO-Gruppen enthaltenden Komponenten mit Zerewittinow-aktivem Wasserstoff enthaltenden Komponenten, insbesondere OH-Gruppen, die gewünschten Endeigenschaften erzeugt werden.

Die EP-A 928 800 beschreibt "Beschichtungssysteme bestehend aus:
a) einem Urethan(meth)acrylat, das (Meth)Acryloylgruppen und freie Isocyanatgruppen aufweist,
b) gegebenenfalls einem weiteren Polyisocyanat,
c) einem, die radikalische Polymerisation initiierenden UV-Initiator,
d) einer oder mehreren mit Isocyanaten reaktiven Verbindung."

Weiterhin wird in der EP-A 928 800 ein Verfahren gelehrt, bei dem durch UV-initiierte radikalische Polymerisation handhabbare Oberflächen und durch darauf folgende NCO-Reaktion die Endeigenschaften entstehen. Hierbei wird Härtung der Beschichtung an nicht oder schlecht belichteten Stellen durch NCO-Reaktion ein "minimal erforderliches Resistenzniveau gewährleistet. Die Beispiele zeigen jedoch, dass die NCO-Reaktion nur durch kurzes Erhitzen (30 min 130°C) oder mehrtägiges Stehen (7 d) bei Raumtemperatur vollständig abläuft.

Für einige Anwendungen, insbesondere für die Beschichtung temperaturempfindlicher Gegenstände oder Gegenständen, die sich aufgrund ihrer Größe und Geometrie nicht wirtschaftlich auf Temperaturen von ca. 130°C aufheizen lassen, ist eine Härtung des Lacks auch ohne Erwärmung und gegebenenfalls ohne UV-Belichtung innerhalb von wenigen Stunden gefordert, damit auch Raumformen und Teile der zu beschichtenden Körper, welche sich aufgrund ihrer Gestalt einer Belichtung entziehen, nach Auftrag der Beschichtung ausgehärtet werden können.

Es wurde gefunden, dass Beschichtungssysteme, welche neben Isocyanatgruppen enthaltenden Urethan(meth)acrylaten auch Hydroxylgruppen aufweisende Urethan-(meth)acrylate enthalten, eine wesentlich verbesserte Härtung vor allem an nicht belichteten Bereichen aufweisen, als sie bei Beschichtungssystemen nach dem Stand der Technik möglich ist.

Gegenstand der Erfindung sind Beschichtungssysteme aus:
a) Urethan(meth)acrylaten, die (Meth)Acryloylgruppen und freie Isocyanatgruppen aufweisen,
b) Urethan(meth)acrylaten, die (Meth)Acryloylgruppen und freie Hydroxylgruppen aufweisen,
c) die radikalische Polymerisation initiierenden UV-Initiatoren, und
d) gegebenenfalls einer oder mehreren mit Isocyanaten reaktiven Verbindung.

Vorzugsweise wird das vorliegende Beschichtungssystem in zwei Komponenten hergestellt, wobei die Komponente I vorzugsweise den Bestandteil a) enthält, die Komponente II die Bestandteile b), c) und d).

Zur Erzielung von Wetterstabilität kann der Komponente II gegebenenfalls zugegeben werden:
e) ein UV-Absorber mit einem Absorptionsbereich bis max. 390 nm und
f) ein HALS-Stabilisator;
weiterhin:
g) übliche Lackadditive wie Verlaufs- oder Entlüftungsmittel und
h) Katalysatoren zur Beschleunigung der NCO-Reaktion.

Komponenten I und II können zur Verdünnung jeweils ein im Sinne der Vernetzung inertes Lösungsmittel enthalten.

Komponente I und Komponente II werden so kombiniert, dass ein Verhältnis zwischen den NCO-Gruppen und mit NCO-reaktiven Gruppen von 2 : 1 bis 0,8 : 1, vorzugsweise von 1,2 : 1 bis 0,8 : 1 eingestellt wird.

Verbindungen gemäß a) werden hergestellt aus (Meth)Acryloylgruppen aufweisenden Alkoholen und Di- oder Polyisocyanaten. Herstellverfahren für Urethan(meth)-acrylate sind grundsätzlich bekannt und beschrieben z. B. in den DE-A 1 644 798, DE-A 2 115 373 oder DE-A 2 737 406. Eine Übersicht findet man in P. K. T. Oldring (Ed.), Chemistry & Technology of UV & EB Formulations For Coatings, Inks & Paints, Vol. 2, 1991, SITA Technology, London, S. 73 - 123. Für die erfindungsgemäßen, freie Isocyanatgruppen aufweisenden Urethan(meth)acrylate beträgt das Mol-Verhältnis von NCO-Gruppen der Di- oder Polyisocyanate zu OH-Gruppen der (Meth)Acryloylgruppen aufweisenden Alkohole von 1 : 0,2 bis 1 : 0,8, vorzugsweise von 1 : 0,3 bis 1 : 0,6, besonders bevorzugt 1 : 0,4 bis 1 : 0,5.

Unter (Meth) Acryloylgruppen aufweisenden Alkoholen sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 3-Hydroxypropyl oder 2-, 3- oder 4-Hydroxybutyl-(meth)acrylat als auch beliebige Gemische aus derartigen Verbindungen. Außerdem kommen auch einwertige (Meth)Acryloylgruppen aufweisende Alkohole oder im wesentlichen aus derartigen Alkoholen bestehende Umsetzungsprodukte in Betracht, die durch Veresterung von n-wertigen Alkoholen mit (Meth)Acrylsäure erhalten werden, wobei als Alkohole auch Gemische von unterschiedlichen Alkoholen eingesetzt werden können, so dass n für eine ganze oder im statistischen Mittel gebrochene Zahl von größer 2 bis 4, vorzugsweise 3 steht, und wobei pro Mol der genannten Alkohole von (n-0,6) bis (n-2,2), bevorzugt von (n-0,8) bis (n-1,2), besonders bevorzugt von (n-1) Mol (Meth) Acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth) Acrylsäure im genannten Molverhältnis. Diese Verbindungen weisen ein Molekulargewicht von 116 bis 1000, vorzugsweise von 116 bis 750 und besonders bevorzugt von 116 bis 158 auf.

Weiterhin sind auch die Umsetzungsprodukte dieser einwertigen (Meth)Acryloylgruppen haltigen Alkohole mit z.B. ε-Caprolacton einsetzbar. Solche Produkte sind beispielsweise erhältlich als Tone® Monomer 100 von der Fa. Union Carbide. Diese Verbindungen weisen ein Molekulargewicht von 230 bis 3000, vorzugsweise von 230 bis 1206 und besonders bevorzugt von 344 bis 572 auf.

Als Di- oder Polyisocyanate sind grundsätzlich aliphatische, araliphatische und aromatische Verbindungen geeignet, wobei aliphatische Verbindungen bevorzugt sind, z.B. Butylendiisocyanat, Hexamethylendiisocyanat (HDI), Isophorondiisocyanat (IPDI), Trimethylhexamethylendiisocyanat (=2,2,4 und/oder 2,4,4-Trimethylhexamethylendiisocyanat), Di(isocyanatocyclohexyl)methan, Isocyanatomethyl-1,8-octandiisocyanat oder deren Derivate mit Urethan-, Isocyanurat-, Allophanat-, Biuret-, Uretdion-, Iminooxadiazindionstruktur und Mischungen derselben. Besonders bevorzugt werden die Derivate von HDI und/oder IPDI mit Isocyanurat-Struktureinheiten.

Die Additionsreaktion des isocyanathaltigen Bestandteils mit den Alkohol haltigen Bestandteilen zum Urethan(meth)acrylat gemäß a) kann in an sich bekannter Weise mittels geeigneter Katalysatoren, wie beispielsweise Zinnoctoat, Dibutylzinndilaurat oder tertiären Aminen beschleunigt werden.

Das resultierende, freie NCO-Gruppen aufweisende Urethan(meth)acrylat wird vorzugsweise gegen vorzeitige Polymerisation stabilisiert, z.B. durch Zugabe geeigneter Inhibitoren und Antioxidantien wie beispielsweise Phenole, Kresole, Hydrochinone, gegebenenfalls auch Chinone wie z. B. 2,5-Di-tert.-Butylchinon. Geeignete derartige Zusatzmittel sind z.B. in "Methoden der organischen Chemie" (Houben-Weyl), 4. Auflage, Band XIV/1, S. 433ff, Georg Thieme Verlag, Stuttgart 1961, beschrieben.

Diese Inhibitoren werden in Mengen von jeweils 0,001 bis 0,3 Gew. % während oder im Anschluss an die Herstellung zugegeben.

Die erfindungsgemäßen Beschichtungssysteme können in, im Sinne der Herstellung und späteren Verwendung, inerten Lösemitteln hergestellt werden.

Als Komponente b) aufgeführte Urethan(meth)acrylate, die (Meth)Acryloylgruppen und freie Hydroxylgruppen aufweisen, sind bevorzugt Umsetzungsprodukte von unter a) aufgeführten Urethan(meth)acrylaten, die (Meth)Acryloylgruppen und freie Isocyanatgruppen aufweisen, mit Diolen, gegebenenfalls in Mischung mit Oligo- und/oder Polyolen.

Als Diole können aliphatische, cycloaliphatische oder weniger bevorzugt aromatische Diole eingesetzt werden, beispielsweise Glykol, die isomeren Propandiole und die isomeren Butandiole, Pentandiole, Hexandiole, Heptandiole, Octandiole, Nonandiole, sowie Cyclohexandimethanol, hydriertes Bisphenol-A, weiterhin mit einer C₁-C₆-Alkylgruppe oder mehreren C₁-C₆-Alkylgruppen substituierte Derivate der vorgenannten Diole, aber auch Estergruppen oder Ethergruppen enthaltende Diole wie (3-Hydroxy-2,2-dimethylpropyl)-3-hydroxy-2,2-dimethylpropionat oder Diethylenglykol, Dipropylenglykol, Tripropylenglykol. Bevorzugt werden Neopentylglykol, 2,2-Dimethyl-1,3-propandiol, 2-Ethyl-1,3-hexandiol, 2,5-Dimethyl-1,6-hexandiol, 2,2,4-Trimethyl-1,3-pentandiol, (3-Hydroxy-2,2-dimethylpropyl)-3-hydroxy-2,2-dimethylpropionat. Die Diole können auch in Form ihrer Alkoxylierungsprodukte (Ethylenoxid, Propylenoxid, C₄-Ether-Bausteine) eingesetzt werden. Auch der Einsatz von Polyesterdiolen ist möglich. Es handelt sich dabei um die Umsetzungsprodukte von gegebenenfalls ethylenisch ungesättigten Dicarbonsäuren und/oder Dicarbonsäureanhydriden gegebenenfalls auch von Lactonen wie ε-Caprolacton mit vorgenannten Diolen. Ebenso möglich ist der Einsatz von α,ω-Dihydroxypolyacrylaten (z.B. ®Tegomer BD 1000, Fa. Goldschmidt).

Alkohole mit einer Hydroxy-Funktionalität größer als 2 ist nur in untergeordneter Menge möglich, da ansonsten die Viskosität des Bindemittels zu hoch für die meisten Anwendungen wird. Beispiele sind Glycerin, Trimethylolpropan, Pentaerythrit oder Ditrimethylolpropan oder deren alkoxylierte Derivate, weiterhin hydroxyfunktionelle Polymere wie Polyacrylate oder Polyester.

Für die Härtung durch energiereiche Strahlung kann weiterhin eine Photoinitiatorkomponente c) zugegeben werden. Diese umfasst an sich bekannte Initiatoren, die eine radikalische Polymerisation nach Bestrahlen mit energiereicher Strahlung wie zum Beispiel UV-Licht auslösen können. Solche Photoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, S. 61-325. Als Beispiele seien aufgeführt 2-Hydroxyphenylketone wie z. B. 1-Hydroxycyclohexyl-phenyl-keton, Benzilketale wie z. B. Benzildimethylketal, Acylphospinoxide wie z. B. Bis-(2,4,6-trimethylbenzoyl)-phenylphosphinoxid, Diacylphosphinoxide, Benzophenon und dessen Derivate. Sie werden allein oder in Mischung gegebenenfalls auch zusammen mit weiteren Beschleunigern oder Coinitiatoren als Zusatz berechnet auf Festkörper des Beschichtungssystems in Mengen von 0,1 bis 10 Gew.-Teilen, bevorzugt 2 bis 7 Gew.-Teilen, besonders bevorzugt 3 bis 4 Gew.-Teilen verwendet.

Mit Isocyanaten reaktive Verbindungen entsprechend Punkt d) sind Polyole. Diese können z.B. durch Veresterung von Di- oder Triolen, z.B. Neopentylglykol oder Trimethylolpropan mit Di-, Tri- oder Tetracarbonsäuren bzw. soweit zugänglich deren Anhydride wie z.B. Adipinsäure, Maleinsäureanhydrid oder Fumarsäure erhalten werden. Desweiteren sind geeignet hydroxyfunktionelle Copolymere, hergestellt im wesentlichen aus (Meth)Acrylsäureestern, Hydroxyalkyl(meth)acrylsäureestern und gegebenenfalls Styrol und/oder anderer Monomeren wie z. B. Acrylnitril. Weitere Polyole sind auch Polyetherpolyole, wie sie durch Alkoxylierung von Di- oder Polyolen erhalten werden. Als weitere mit Isocyanaten reaktive Verbindungen kommen sterisch gehinderte Amine, wie sie durch Addition von Maleinsäureester an aliphatische, primäre Diamine entstehen, in Betracht.

Es ist auch möglich, dass die mit Isocyanaten reaktiven Verbindungen zusätzlich ethylenisch ungesättigte Gruppen enthalten, z.B. Ester der (Meth)acrylsäure. Solche Verbindungen werden beispielsweise hergestellt, indem hydroxyfunktionelle Copolymere wie Polyacrylate unter Verwendung von Epoxidtragenden Monomeren hergestellt werden. Die Epoxidgruppen werden in einem weiteren Schritt mit (Meth)Acrylsäure umgesetzt. Weiterhin sind auch Polyesteracrylate oder Plyetheracrylate, z.B. beschrieben in P. K. T. Oldring (Ed.), Chemistry & Technology of UV & EB Formulations For Coatings, Inks & Paints, Vol. 2, 1991, SITA Technology, London, S. 123-135, einsetzbar, solange sie über freie Hydroxylgruppen verfügen.

Zur Erzielung von Wetterstabilität der gehärteten Lackschicht kann vorzugsweise der Komponente II ein UV-Absorber mit einem Absorptionsbereich bis max. 390 nm entsprechend e) und ein HALS-Stabilisator entsprechend f) zugegeben werden. Geeignete UV-Absorber sind vom Triphenyltriazintyp z. B. Tinuvin ® 400 (Ciba) oder vom Typ der Oxalsäuredianilide z. B. Sanduvor ® 3206 (Clariant). Die UV-Absorber werden vorzugsweise in Mengen von jeweils 0,5 bis 3,5 % bezogen auf festes Bindemittel zugegeben. Geeignete HALS-Stabilisatoren sind die handelsüblichen Typen wie z. B. Tinuvin ® 292 oder Tinuvin ® 123 (Ciba) oder Sanduvor ® 3058 (Clariant). Diese HALS-Stabilisatoren werden bevorzugt in Mengen von 0,5 bis 2,5 % bezogen auf festes Bindemittel zugegeben.

Als Lackadditive gemäß g) seien beispielhaft genannt:
Entlüftungsmittel wie Polyacrylate und Verlaufsmittel wie Polysiloxane.

Geeignete Lösemittel sind Lösemittel, die gegenüber Isocyanatgruppen und C=C-Doppelbindungen inert sind, wie z. B. Ester, Ketone, Ether, Etherester, Alkane, oder aromatische Lösemittel wie Xyole oder Toluol.

Werden alle Bestandteile des erfindungsgemäßen Beschichtungssystems als eine Komponente formuliert, hat das System eine bestimmte Standzeit (pot-life). Eine bevorzugte Formulierungsform ist jedoch ein zweikomponentiges System, wobei Komponente I den Bestandteil a) enthält, die Komponente II die Bestandteile b), c) und d) sowie gegebenenfalls alle Bestandteile von e) bis h). Die jeweiligen Komponenten sind dann analog der Lagerfähigkeit der Bestandteile lagerstabil. Beide Komponenten werden vor der Applikation im angegebenen Verhältnis gemischt oder über sog. Zweikomponentenanlagen appliziert.

Das erfindungsgemäße Beschichtungssystem kann mit allen üblichen Applikationsmethoden wie Spritz-, Gieß- oder Walzapplikation, bevorzugt über Spritzapplikation, aufgetragen werden.

Die Aushärtung des aufgetragenen Beschichtungssystems erfolgt in aufeinanderfolgenden Schritten:
Schritt 1: Durch Ablüftung gegebenenfalls zugegebener Lösemittel. Dies erfolgt bei Raumtemperatur oder erhöhter Temperatur, vorzugsweise bis 80°C.
Schritt 2: Durch UV-Härtung, geeignet sind handelsübliche Quecksilber-Hoch bzw. Mitteldruckstrahler, diese Strahler können durch andere Elemente dotiert sein und weisen bevorzugt eine Leistung von 80 bis 240 W/cm Lampenlänge auf.
Schritt 3: Durch Vernetzung der NCO-haltigen Bestandteile mit den mit NCO-haltigen Bestandteilen reaktiven Bestandteilen. Dies kann über 0°C, bevorzugt bei oder über Raumtemperatur oder erhöhter Temperatur, vorteilhaft unter 150°C erfolgen. Bevorzugt läuft diese Reaktion bei temperaturempfindlichen Substraten oder bei Anwendungen, die ein Erwärmen des Substrats aufgrund seiner Größe und/oder Form unwirtschaftlich machen, im Bereich von Raumtemperatur ab. Die Aushärtung erfolgt auch an während Schritt 2 nicht belichteten Stellen (z.B. Falzen, Umgriffen, Winkeln oder anders verdeckten Stellen). Die Aushärtung durch NCO-OH-Reaktion und physikalische Effekte liefert erwartungsgemäß nicht so lösemittel- und kratzresistente Beschichtungen wie die zusätzlich auch UV-gehärtete Beschichtung, das Niveau der Resistenz in Schattenzonen ist aber überraschend gut, wie durch die Beispiele erläutert wird.

Eine mögliche Variante des Aushärtungsverfahren besteht z.B. darin, die Reaktion der NCO-haltigen Bestandteile teilweise während der UV-Härtung unter Erhöhung der Umgebungstemperatur ablaufen zu lassen.

Ein weiterer Gegenstand der Erfindung ist auch die Verwendung der Beschichtungssysteme zur Beschichtung von temperaturempfndlichen Gegenständen. Diese Gegenstände können auch komplexe (komplizierte) Raumformen einnehmen, die einer Aushärtung aufgetragener Beschichtungsmittel mittels UV-Strahlung alleine nur schwer zugänglich sind.

### Beispiele:

### NCO-Gruppen haltiges Urethanacrylat A:

Von Desmodur® VP LS 2103 (Versuchsprodukt Bayer AG, Leverkusen, im wesentlichen HDI-Isocyanurate enthaltendes Polyisocyanat, NCO-Gehalt: 18,0 Gew.-%, Viskosität 2000 mPa.s bei 23°C, 90%ig in Butylacetat) werden 790,3 g in 152 g Butylacetat gelöst. Dazu werden 1,0 g 2,6-Di-tert.-butyl-4-methyl-phenol sowie 1,0 g Dibutylzinndilaurat gegeben. Unter Durchleiten von Luft und Rühren wird die Lösung auf 60°C erwärmt. Die Heizquelle wird entfernt und es werden 209,7 g 2-Hydroxyethylacrylat derart zugetropft, dass die Temperatur zwischen 55 und 65°C liegt. Im Anschluss wird bei 60°C weiter umgesetzt, bis der NCO-Gehalt unter 5,8% liegt.

### NCO-Gruppen haltiges Urethanacrylat B:

Von Desmodur® N 3600 (Handelsprodukt Bayer AG, Leverkusen, im wesentlichen HDI-Isocyanurate enthaltendes Polyisocyanat, NCO-Gehalt: 23,4 Gew.-%, Viskosität 1200 mPa.s bei 23°C) werden 552,0 g in 167 g n-Butylacetat gelöst. Dazu werden 1,6 g 2,6-Di-tert.-butyl-4-methyl-phenol gegeben. Unter Durchleiten von Luft und Rühren wird die Lösung auf 60°C erwärmt. Die Heizquelle wird entfernt und es werden 116,0 g 2-Hydroxyethylacrylat derart zugetropft, dass die Temperatur zwischen 55 und 65°C liegt. Im Anschluss wird bei 60°C weiter umgesetzt, bis der NCO-Gehalt unter 10,4% liegt.

### OH-Gruppen haltiges Urethanacrylat C:

Von Desmodur® Z 4470 BA (Handelsprodukt Bayer AG, Leverkusen, im wesentlichen IPDI-Isocyanurate enthaltendes Polyisocyanat, NCO-Gehalt: 11,8 Gew.-%, Viskosität 1500 mPa.s bei 23°C, 80%ig in Butylacetat) werden 640,8 g vorgelegt. Dazu werden 1,0 g 2,6-Di-tert.-butyl-4-methyl-phenol sowie 1,0 g Dibutylzinndilaurat gegeben. Unter Durchleiten von Luft und Rühren wird die Lösung auf 60°C erwärmt. Die Heizquelle wird entfernt und es werden 99,3 g 2-Hydroxyethylacrylat derart zugetropft, dass die Temperatur zwischen 55 und 65°C liegt. Im Anschluss wird bei 60°C weiter umgesetzt, bis der NCO-Gehalt konstant bleibt. Anschließend wird mit 249,9 g 2,2,4-Trimethyl-1,5-pentandiol weiter umgesetzt, bis der NCO-Gehalt unter 0,1% liegt. Im Anschluss wird der Festgehalt mit Butylacetat auf 80% eingestellt.

### OH-Gruppen haltiges Urethanacrylat D:

Die Herstellung des OH-Gruppen haltigen Urethanacrylat C wird wiederholt mit dem Unterschied, dass statt 2,2,4-Trimethyl-1,5-pentandiol jetzt 291,3 g (3-Hydroxy-2,2-dimethylpropyl)-3-hydroxy-2,2-dimethylpropionat eingesetzt werden.

### OH-Gruppen haltiges Urethanacrylat E:

Die Herstellung des OH-Gruppen haltigen Urethanacrylat C wird wiederholt mit dem Unterschied, dass statt 99,3 g jetzt 150,0 g 2-Hydroxyethylacrylat und statt 249,5 g jetzt 190,0 g 2,2,4-Trimethyl-1,5-pentandiol eingesetzt werden.

Es wurde u.a. folgendes erfindungsgemäßes Beschichtungssystem formuliert: Bindemittelgehalt 54 Gew.%, Auslaufzeit DIN-4-Becher (4mm Düse DIN 53211) ca. 20s.

| Rezeptur Nr. | NCO-Gruppen haltiges Urethanacrylat A, Gew.Tle. | OH-Gruppen haltiges Urethanacrylat E, Gew. Tle. | Polyol: Desmophen® VP LS 2089¹⁾, 75%ig Butylacetat Gew. Tle. | Photoinitiator Irgacure® 184²⁾ 50%ig Butylacetat Gew. Tle | Additive und Lösungsmittel |
|---|---|---|---|---|---|
| 1 | 36,5 | 20,8 | 10,1 | 4,4 | 28,2³⁾ |
| Rezeptur Nr.2: Als Vergleich wird Beispiel 2 aus EP-A 928 800 nachgestellt. | | | | | |

| | | | | | |
|---|---|---|---|---|---|
| 1) Polyesterpolyol Versuchsprodukt Fa. Bayer AG, Leverkusen | | | | | |
| 2) Fa. Ciba Spezialitätenchemie, Lampertheim | | | | | |
| 3) davon [Gew. Tle.]: Butylacetat 24,8, Byk® 331(Fa. Byk-Chemie) 50%ig in Butylacetat 0,2, Modaflow® (Fa. Monsanto), 1%ig in Xylol 0,2, Sanduvor® 3206 (Fa. Clariant) 1,0, Sanduvor® 3058 (Fa. Clariant) 0,5, DBTL (Fa. RheinChemie) 1%ig in Butylacetat 1,5. | | | | | |

Die formulierten Lacke werden unmittelbar nach Herstellung mittels Luftdrucksprüh-Applikation (Düse 1,3 mm Durchmesser, Spritzdruck 3,5 bar) auf Glasplatten und Stahlbleche, wobei letztere mit einer Grundierung und einem üblichen Autoreparatur-Basislack beschichtet sind, aufgebracht (resultierende Schichtdicke ca. 40 - 50 µm). Die Platten werden 10 min bei 60°C vorgetrocknet, anschließend werden sie unter einem Quecksilberhochdruckstrahler (80 W/cm) bei unterschiedlichen Bandgeschwindigkeiten herbewegt (*). Hierbei wird die UV-Reaktivität der Systeme bis zur Oberflächeninhibierung (d.h. nach der UV-Bestrahlung ist die Lackoberfläche nicht gehärtet) geprüft. Weitere Prüfungen dienen der Charakterisierung der Lackfilmeigenschaften nach einer UV-Härtung von 2m/min (**):

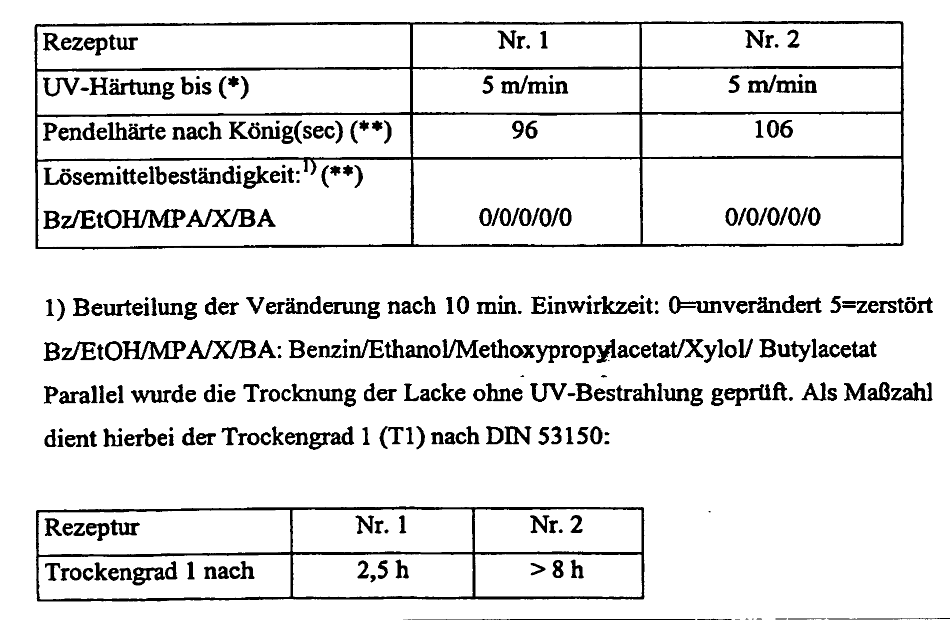

Der Vergleich der beiden Rezepturen zeigt, dass mit dem neuen Bindemittelsystem bei vergleichbaren Eigenschaften unter UV-Bestrahlung eine wesentlich schnellere Trocknung ohne UV-Bestrahlung der Systeme erreicht wird.

## Patentansprüche

1. Beschichtungssysteme aus:
a) Urethan(meth)acrylaten, die (Meth) Acryloylgruppen und freie Isocyanatgruppen aufweisen,
b) Urethan(meth)acrylaten, die (Meth) Acryloylgruppen und freie Hydroxylgruppen aufweisen,
c) radikalische Polymerisation initiierende UV-Initiatoren,
d) gegebenenfalls einer oder mehreren mit Isocyanaten reaktiven Verbindung.

2. Beschichtungssystem gemäß Anspruch 1, **dadurch gekennzeichnet, dass** die mit Isocyanat reaktive Verbindung ein Polyol ist.

3. Beschichtungssystem gemäß Anspruch 1 **dadurch gekennzeichnet, dass** die mit Isocyanat reaktive Verbindung ethylenisch ungesättigte Gruppen enthält.

4. Beschichtungssystem gemäß Anspruch 1 **dadurch gekennzeichnet, dass** eine weitere mit Isocyanat reaktive Verbindung ein sterisch gehindertes, sekundäres, mehrwertiges Amin ist.

5. Beschichtungssystem gemäß einem der vorangehenden Ansprüche **dadurch gekennzeichnet, dass** ein UV Absorber mit einem Absorptionsbereich bis 390 nm enthalten ist.

6. Beschichtungssystem gemäß einem der vorangehenden Ansprüche **dadurch gekennzeichnet, dass** ein HALS Amin enthalten ist.

7. Verwendung der Beschichtungssysteme gemäß Anspruch 1 zur Beschichtung von temperaturempfindlichen Gegenständen.

8. Verwendung von Beschichtungssysteme nach Anspruch 1 zur Beschichtung von Gegenständen mit komplexen Raumformen.

## Claims

1. Coating systems comprising
a) urethane (meth)acrylates which contain (meth)acryloyl groups and free isocyanate groups,
b) urethane (meth)acrylates which contain (meth)acryloyl groups and free hydroxyl groups,
c) UV initiators which initiate free-radical addition polymerization,
d) if desired, one or more isocyanate-reactive compounds.

2. Coating system according to Claim 1, **characterized in that** the isocyanate-reactive compound is a polyol.

3. Coating system according to Claim 1, **characterized in that** the isocyanate-reactive compound contains ethylenically unsaturated groups.

4. Coating system according to Claim 1, **characterized in that** a further isocyanate-reactive compound is a sterically hindered, secondary, polyfunctional amine.

5. Coating system according to any one of the preceding claims, **characterized in that** it comprises a UV absorber having an absorption range up to 390 nm.

6. Coating system according to any one of the preceding claims, **characterized in that** it comprises a HALS amine.

7. Use of the coating systems according to Claim 1 for coating temperature-sensitive articles.

8. Use of coating systems according to Claim 1 for coating articles having complex three-dimensional shapes.

## Revendications

1. Systèmes de revêtement composés :
a) de (méth)acrylates d'uréthanne qui présentent des groupes (méth)acryloyle et des groupes isocyanate libres;
b) de (méth)acrylates d'uréthanne qui présentent des groupes (méth)acryloyle et des groupes isocyanate libres;
c) d'initiateurs réagissant aux UV, initiant la polymérisation radicalaire;
d) éventuellement, d'un ou plusieurs composés réactifs aux isocyanates.

2. Système de revêtement selon la revendication 1, **caractérisé en ce que** le composé réactif aux isocyanates est un polyol.

3. Système de revêtement selon la revendication 1, **caractérisé en ce que** le composé réactif aux isocyanates contient des groupes éthyléniquement insaturés.

4. Système de revêtement selon la revendication 1, **caractérisé en ce qu'**un composé supplémentaire réactif aux isocyanates est une amine secondaire polyvalente bloquée stériquement.

5. Système de revêtement selon l'une des revendications précédentes **caractérisé en ce qu'**un absorbeur d'UV avec une gamme d'absorption jusqu'à 390 nm est contenu.

6. Système de revêtement selon l'une des revendications précédentes, **caractérisé en ce qu'**une amine HALS est contenue.

7. Mise en oeuvre des systèmes de revêtement selon la revendication 1 pour le revêtement d'objets sensibles à la température.

8. Mise en oeuvre de systèmes de revêtement selon la revendication 1 pour le revêtement d'objets aux formes complexes.
